# FASCICULE DE BREVET EUROPEEN

(11) **EP 2 956 323 B1**
(45) Date de publication et mention de la délivrance du brevet: **22.01.2020**
(21) Numéro de dépôt: 14706914.0
(22) Date de dépôt: 11.02.2014
(51) Int. Cl.: B60J 5/04

(54) **OUVRANT DE VÉHICULE AVEC PANNEAU DE RIGIDIFICATION EN PLASTIQUE INCLUANT UN SYSTÈME DE LÈVE-VITRE**
FAHRZEUGTÜR MIT EINER VERSTEIFUNGSPLATTE AUS KUNSTSTOFF UMFASSEND EIN FENSTERHEBESYSTEM
VEHICLE DOOR COMPRISING A PLASTIC STIFFENING PANEL WITH A WINDOW LIFT SYSTEM

(30) Priorité: 13.02.2013 FR 1351206
(43) Date de publication de la demande: 23.12.2015
(73) Titulaire: Renault S.A.S., 92100 Boulogne-Billancourt (FR)
(72) Inventeur: GLAUMOT, Olivier, 91470 Forges les Bains (FR)
(86) Numéro de dépôt international: PCT/FR2014/050257
(87) Numéro de publication internationale: WO 2014/125203

(56) Documents cités:
- EP-A2- 1 129 873
- US-A1- 2004 217 623

## Description

### Domaine technique de l'invention

L'invention concerne le domaine des ouvrants de véhicule automobile, notamment pour porte latérale de véhicule automobile, avec des panneaux de rigidification. Un ouvrant de ce type est connu de US 2004/0217623 A1.

L'invention a pour objet également un procédé d'assemblage d'un tel ouvrant de véhicule automobile.

### État de la technique

Dans le domaine automobile, le poids du véhicule est un paramètre primordial en termes de consommation et de pollution notamment. Cette problématique de gain de poids affecte en particulier les ouvrants du véhicule, en particulier les portes latérales qu'elles soient articulées sur la caisse ou montées à coulissement.

Le montage d'une vitre et d'un système de lève-vitre représente une vraie problématique dans ce contexte d'optimisation de poids. Classiquement, une porte latérale réalisée majoritairement en matière métallique, c'est-à-dire en acier ou en aluminium, réalise la fixation du système de lève-vitre dans une cassette de porte agencée du côté des éléments d'ébénisterie, c'est-à-dire du côté de l'habitacle par rapport à la structure de la porte.

Les solutions existantes sont donc perfectibles en termes de poids, de complexité et d'encombrement en raison des choix de matériaux et de l'utilisation de pièces destinées à la fixation du système de lève-vitre sur le reste de l'ouvrant. De plus, l'assemblage de l'ouvrant est délicat, compte tenu du mode de fixation du système de lève-vitre.

### Objet de l'invention

Le but de la présente invention est de proposer une solution pour un ouvrant de véhicule automobile, notamment pour une porte latérale, qui remédie aux inconvénients listés ci-dessus.

Notamment, il s'agit de fournir une solution permettant d'optimiser le poids de l'ouvrant, de simplifier la conception et de faciliter l'assemblage de l'ouvrant, tout en améliorant l'habitabilité en diminuant l'encombrement de l'ouvrant.

Ces objectifs peuvent être atteints par un ouvrant de véhicule automobile avec panneau de rigidification selon la revendication 1.

Avantageusement, le panneau de rigidification peut être formé dans une matière thermoplastique.

Lesdits éléments de fixation peuvent avantageusement comprendre :
- des éléments de montage, sur le panneau de rigidification, d'un moyen de guidage appartenant audit système de lève-vitre et assurant un guidage d'une vitre de l'ouvrant entre une position abaissée et une position relevée,
- et/ou des éléments de montage, sur le panneau de rigidification, d'au moins un moyen de levage et d'abaissement de vitre, appartenant audit système de lève-vitre et assurant un déplacement de la vitre entre la position abaissée et la position relevée.

Les éléments de montage d'au moins un moyen de levage et d'abaissement de vitre comprennent préférentiellement :
- des éléments d'assemblage, sur ledit panneau de rigidification, d'au moins un support destiné à coopérer avec la vitre et déplaçable par rapport audit panneau de rigidification d'une manière faisant varier la vitre entre les positions relevée et abaissée,
- des éléments d'assemblage, sur ledit panneau de rigidification, d'au moins une butée limitant la course dudit au moins un support,
- des éléments d'assemblage, sur ledit panneau de rigidification, d'au moins un câble de mise en déplacement du support,
- des éléments d'assemblage, sur ledit panneau de rigidification, d'un moteur mettant en mouvement ledit au moins un câble,
- et éventuellement des éléments d'assemblage, sur ledit panneau de rigidification, d'au moins une poulie de guidage dudit au moins un câble durant son mouvement.

Le panneau de rigidification peut comprendre des éléments de fixation, sur ledit panneau de rigidification, d'un module de commande d'ouverture extérieure de l'ouvrant et/ou d'un support de verrou destiné à réaliser une fermeture de l'ouvrant par rapport à une caisse de véhicule automobile équipée dudit ouvrant.

L'ouvrant comprend préférentiellement :
- un moyen de guidage monté sur ledit panneau de rigidification, appartenant audit système de lève-vitre et assurant un guidage de la vitre entre une position abaissée et une position relevée,
- et/ou au moins un moyen de levage et d'abaissement de vitre monté sur le panneau de rigidification, appartenant audit système de lève-vitre et assurant un déplacement de la vitre entre la position abaissée et la position relevée.

Le moyen de levage et d'abaissement de vitre peut comprendre :
- au moins un support assemblé au panneau de rigidification, coopérant avec la vitre et déplaçable par rapport audit panneau de rigidification d'une manière faisant varier la vitre entre les positions relevée et abaissée,
- au moins une butée assemblée au panneau de rigidification et limitant la course dudit au moins un support,
- au moins un câble de mise en déplacement du support et assemblé au panneau de rigidification,
- un moteur assemblé au panneau de rigidification et mettant en mouvement ledit au moins un câble,
- et éventuellement au moins une poulie de guidage dudit au moins un câble durant son mouvement et assemblée au panneau de rigidification.

La structure et/ou le panneau de rigidification et/ou le panneau extérieur de finition peuvent être assemblés entre eux par soudage, notamment de type ultrason ou laser, et/ou par collage et/ou par vissage et/ou par encliquetage et/ou par rivetage et/ou par bouterollage.

La structure peut comprendre d'une part une doublure intérieure en matière plastique disposée, suivant l'épaisseur de l'ouvrant, d'un côté de la structure destiné à être orienté vers l'habitacle du véhicule, d'autre part un renfort structurel extérieur en matière plastique disposé, suivant l'épaisseur de l'ouvrant, d'un côté de la structure opposé à l'habitacle par rapport à la doublure intérieure, la doublure intérieure et le renfort structurel extérieur étant configurés et assemblés l'un à l'autre de sorte à délimiter entre eux un corps creux conférant la résistance de la structure face aux chocs extérieurs.

Un procédé d'assemblage d'un ouvrant de véhicule automobile selon l'invention comprend les étapes définies dans la revendication 10.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un éclaté de l'assemblage d'une porte latérale de véhicule automobile comprenant un exemple de panneau de rigidification selon l'invention,
- les figures 2 et 3 sont des vues de l'ensemble pré-monté formé par le panneau de rigidification, la vitre et le système de lève-vitre, respectivement du côté extérieur et du côté intérieur de cet ensemble,
- la figure 4 est une vue du côté intérieur de la porte latérale,
- la figure 5 est une vue en coupe transversale-verticale de la porte latérale de la figure 1,
- les figures 6 et 7 illustrent chacune le renfort structurel extérieur sur lequel est monté l'ensemble pré-monté des figures 2 et 3, selon une coupe horizontale.

### Description de modes préférentiels de l'invention

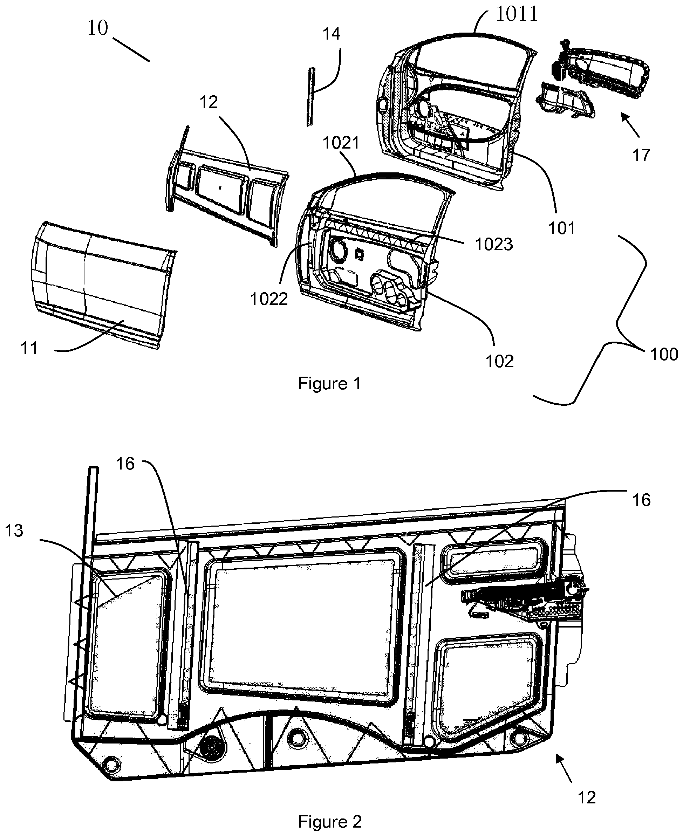

L'invention va être décrite ci-après en relation avec les figures 1 à 7 annexées qui représentent un exemple d'ouvrant 10 de véhicule automobile selon l'invention et comprenant un exemple de panneau de rigidification 12 de l'ouvrant 10 selon l'invention. Les figures 1 à 7 concernent le cas particulier non limitatif mais particulièrement visé par l'invention d'un ouvrant 10 constitué par une porte latérale de véhicule automobile. Toutefois, cet ouvrant 10 peut être formé par un autre type d'ouvrant.

Plus précisément, l'ouvrant 10 de véhicule automobile, notamment ici la porte latérale selon le mode de réalisation illustré, comprend au moins un panneau extérieur de finition 11, une structure 100 sur laquelle ledit au moins un panneau extérieur 11 est fixé du côté opposé à l'habitacle destiné à être fermé par l'ouvrant 10, ainsi qu'au moins un panneau de rigidification 12 développé plus loin, fixé à la structure 100 et/ou au panneau extérieur 11 et disposé entre le panneau extérieur 11 et la structure 100.

Le terme « structure » utilisé dans ce document signifie qu'il s'agit de l'élément de l'ouvrant 10 qui est destiné à encaisser la grande majorité des efforts résultant de chocs extérieurs appliqués à l'ouvrant 10. Ainsi, une partie nettement plus faible desdits efforts peut toutefois être destinée à être encaissée par d'autres éléments de l'ouvrant 10 indépendants de la structure 100, en particulier le panneau extérieur de finition 11 et le panneau de rigidification 12. Ce panneau de rigidification 12 est configuré pour conférer une raideur au panneau extérieur de finition 11 face aux chocs extérieurs appliqués à l'ouvrant 10 du côté opposé à l'habitacle, en sus de celle conférée par la structure 100. La raideur conférée à l'ouvrant 10 par l'intermédiaire d'un tel panneau de rigidification 12 vient donc s'ajouter aux propriétés de raideur, de robustesse et d'absorption de chocs conférée à l'ouvrant 10 par la structure 100. La structure 100 est notamment en matière plastique pour des raisons d'économie de poids et de facilité de recyclage de l'ouvrant 10 et elle est disposée du côté de l'habitacle du véhicule. De même, ledit au moins un panneau extérieur de finition 11 est avantageusement en matière plastique, pour les mêmes raisons.

Selon une caractéristique essentielle, le panneau de rigidification 12 est formé dans une matière plastique et comprend des éléments de fixation, sur ledit panneau de rigidification 12, d'un système de lève-vitre. Il peut notamment être fait en sorte que le panneau de rigidification 12 soit assemblé au reste de l'ouvrant 10 d'une manière telle que le panneau de rigidification 12 soit interposé entre le panneau extérieur de finition 11 et la vitre 13 portée par le système de lève-vitre lui-même fixé au panneau de rigidification 12.

Cette caractéristique est intéressante car en position abaissée, la vitre 13 se retrouve alors située vers l'extérieur de l'ouvrant par rapport à la structure 100. Outre la fixation spécifique de la vitre 13 sur le panneau de rigidification 12, cela peut induire une nécessité de prévoir un galbe spécifique de la vitre 13.

Un avantage de cette caractéristique est de permettre de libérer autant que possible la place dans la structure 100 de l'ouvrant 10, ce qui permet de diminuer l'épaisseur de la structure 100, notamment au niveau de la doublure intérieure 101 appartenant à la structure 100 et qui peut aussi être nommée « caisson », ainsi que de ne pas grever l'habitabilité conférée par l'ouvrant 10 du côté intérieur orienté vers l'habitacle.

L'avantage d'intégrer le système de lève-vitre au panneau de rigidification 12 est d'utiliser la matière d'une pièce existante et nécessaire. Cela confère donc avantageusement une fonction supplémentaire au panneau de rigidification 12. Ainsi, l'ouvrant 10 présente un poids total optimisé et la conception de l'ensemble est simple en utilisant un nombre réduit de pièces nécessaires au montage du système de lève-vitre. Le gain de poids de la solution décrite ici par rapport à des solutions existantes a été estimé comme étant compris entre environ 500g et 1kg.

Avantageusement, le panneau de rigidification 12 est formé dans une matière thermoplastique, par exemple une matrice polypropylène ou polyamide.

La structure 100 de l'ouvrant 10 comprend une doublure intérieure 101 et un renfort structurel extérieur 102 tous deux formés essentiellement dans une matière plastique. La matière plastique utilisée pour former la doublure intérieure 101 peut être identique ou différente de celle dans laquelle est formé le renfort structurel extérieur 102. Suivant la direction correspondant à l'épaisseur de la structure 100 (ce qui correspond à la direction de l'épaisseur de l'ouvrant 10 destinée globalement à être orientée selon la direction horizontale transversale du véhicule dans le cas d'une porte latérale lorsque celle-ci est fermée par rapport à la caisse du véhicule), la doublure intérieure 101 est disposée d'un côté de la structure 100 destiné à être orienté en direction de l'habitacle du véhicule. Par contre, le renfort structurel extérieur 102 est disposé, suivant l'épaisseur de la structure 100, d'un côté de la structure 100 opposé à l'habitacle du véhicule par rapport à la doublure intérieure 101. Autrement dit, le renfort structurel extérieur 102 est orienté en direction de l'extérieur du véhicule, en direction du panneau de rigidification 12 et du panneau extérieur de finition 11, dans un sens opposé au sens allant en direction de l'habitacle.

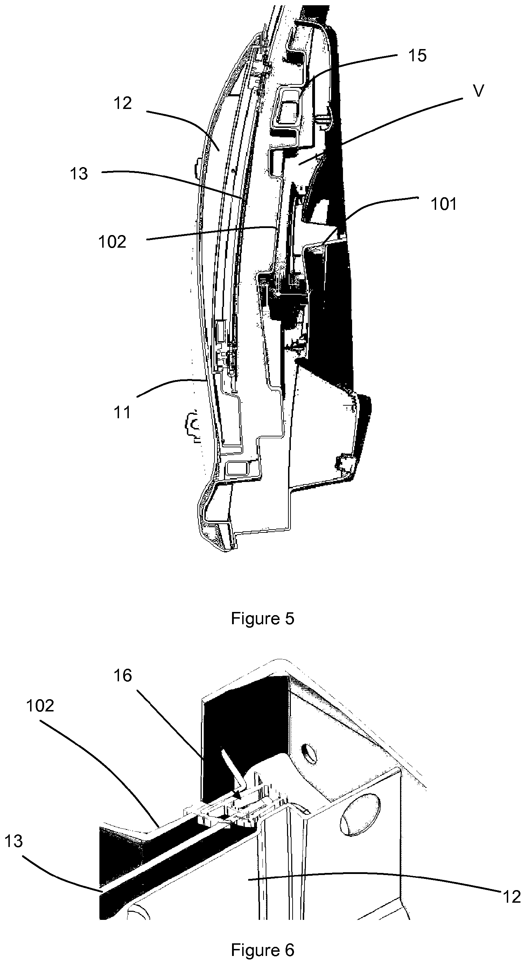

La doublure intérieure 101 et le renfort structurel extérieur 102 sont configurés (ce qui correspond à une définition du dimensionnement, de l'organisation spatiale et des formes de ces deux éléments) et assemblés l'un à l'autre de sorte à délimiter entre eux un corps creux conférant une résistance (raideur, robustesse, propriété d'absorption d'énergie) de l'ouvrant 10 aux chocs extérieurs, notamment aux chocs frontaux et latéraux appliqués à l'ouvrant 10 lorsqu'il est constitué par une porte latérale. Il est entendu par « corps creux » le fait que la doublure intérieure 101 et le renfort structurel extérieur 102 délimitent entre eux un volume intérieur noté « V » (figure 5), de type caisson ou cavité, que ce volume V soit fermé ou partiellement ouvert vers l'extérieur. Ce corps creux périphérique de l'ouvrant 10 participe grandement à la raideur de l'ensemble et permet de satisfaire les cahiers de charges fonctionnels subis par un ouvrant 10, notamment une porte latérale. De ce fait cette structure 100 préassemblée supporte la plus grande majorité, voire l'intégralité, des entrées et des sorties d'efforts mécaniques subis par un ouvrant, notamment une porte latérale.

Tandis que des techniques actuelles intègrent des renforts en matière métallique (acier ou aluminium) dans des portes latérales pour garantir les prestations, généralement assemblés par surmoulage, la solution décrite ici permet de gagner du poids grâce à l'utilisation de matières plastiques tout en conférant les propriétés mécaniques nécessaires à la fonction de l'ouvrant 10 par l'intermédiaire de l'agencement du corps creux délimité par la structure 100.

Avantageusement, le corps creux délimité par le renfort structurel extérieur 102 et la doublure intérieure 101 assemblés entre eux est fermé sur toute la périphérie de l'ouvrant 10. Cela peut être obtenu en prévoyant une mise en contact continue de la doublure intérieure 101 contre le renfort structurel extérieur 102 sur tout le pourtour de l'ouvrant 10, dans toute la partie inférieure de l'ouvrant 10 au niveau de laquelle est disposé la vitre 13 dans sa position abaissée et dans toute la partie supérieure de l'ouvrant formant un cadre ceinturant la vitre 13 lorsqu'il occupe sa position relevée. Il peut par exemple s'agir d'une piste de soudure continue agencée sur tout le pourtour périphérique de la doublure intérieure 101, même au niveau du cadre 1011 de la doublure intérieure 101 qui ceinture la vitre 13 en position relevée. Ces caractéristiques n'excluent pas que le corps creux puisse être ouvert dans une partie centrale de l'ouvrant 10, en particulier à proximité de la liaison entre lesdites parties inférieure et supérieure de l'ouvrant 10, où par exemple sont agencés des éléments de montage 1023 d'un bandeau de renfort 15 d'ouvrant 10 sur le renfort structurel extérieur 102. La figure 6 illustre en particulier que le corps creux s'étend de manière continue même sur les montants de l'ouvrant 10 dans sa partie supérieure, c'est-à-dire le long des montants du cadre 1011 délimité par la partie supérieure de la doublure intérieure 101 et des montants du cadre 1021 délimité par la partie supérieure du renfort 102 et placés en vis-à-vis et à distance des montants du cadre 101 pour délimiter localement ledit corps creux à la périphérie supérieure de l'ouvrant 10. Cette caractéristique se prolonge sur la traverse supérieure de l'ouvrant 10 reliant les montants de l'ouvrant 10. De même, en partie inférieure de l'ouvrant 10, la doublure intérieure 101 et le renfort 102 sont placés en vis-à-vis et à distance de sorte à délimiter localement ledit corps creux à la périphérie inférieure de l'ouvrant 10.

Le renfort structurel extérieur 102 peut comprendre avantageusement des éléments de montage 1022, sur le renfort structurel extérieur 102, d'éléments d'articulation 14 (de type charnière) destinés à articuler l'ouvrant 10 sur une caisse d'un véhicule comprenant l'ouvrant 10.

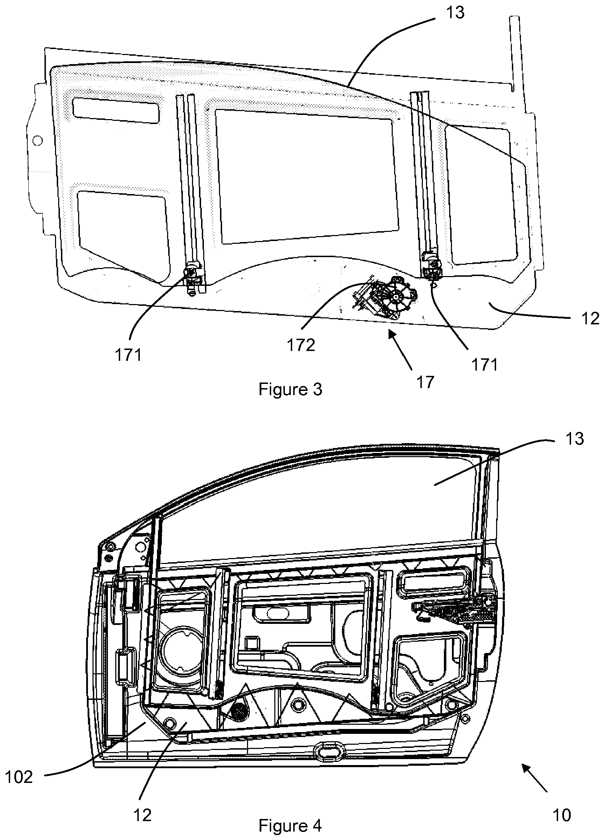

Les éléments de fixation qui permettent la fixation du système de lève-vitre sur le panneau de rigidification 12 comprennent :
- des éléments de montage, sur le panneau de rigidification 12, d'un moyen de guidage 16 (figure 2) appartenant audit système de lève-vitre et assurant un guidage de la vitre 13 de l'ouvrant 10 entre la position abaissée (figure 3) et la position relevée (figure 4),
- et/ou des éléments de montage, sur le panneau de rigidification 12, d'au moins un moyen de levage et d'abaissement 17 de vitre (figure 3), appartenant audit système de lève-vitre et assurant un déplacement de la vitre 13 entre la position abaissée et la position relevée.

Chaque moyen de guidage 16 peut se présenter sous la forme d'un rail de guidage, deux rails de guidage sensiblement verticaux et parallèles entre eux étant par exemple décalés l'un par rapport à l'autre suivant la largeur de la vitre 13 dans la partie inférieure de l'ouvrant 10.

Ainsi, l'ouvrant 10 comprend un moyen de guidage 16 monté sur le panneau de rigidification 12, appartenant audit système de lève-vitre fixé au panneau de rigidification 12 et assurant un guidage de la vitre 13 entre les positions abaissée et relevée et/ou au moins un moyen de levage et d'abaissement 17 de vitre monté sur le panneau de rigidification 12, appartenant audit système de lève-vitre fixé au panneau de rigidification 12 et assurant un déplacement de la vitre 13 entre les positions abaissée et relevée.

Les éléments de montage d'au moins un moyen de levage et d'abaissement 17 de vitre comprennent :
- des éléments d'assemblage, sur ledit panneau de rigidification 12, d'au moins un support 171 (figure 3) destiné à coopérer avec la vitre 13 et déplaçable par rapport audit panneau de rigidification 12 d'une manière faisant varier la vitre 13 entre les positions relevée et abaissée,
- des éléments d'assemblage, sur ledit panneau de rigidification 12, d'au moins une butée (non représentée) limitant la course dudit au moins un support 171, dans la partie inférieure et/ou dans la partie supérieure de ladite course,
- des éléments d'assemblage, sur ledit panneau de rigidification 12, d'au moins un câble (non représenté) de mise en déplacement de chaque support 171,
- des éléments d'assemblage, sur ledit panneau de rigidification 12, d'un moteur 172 mettant en mouvement ledit au moins un câble,
- et éventuellement des éléments d'assemblage, sur ledit panneau de rigidification 12, d'au moins une poulie de guidage (non représentée) dudit au moins un câble durant son mouvement.

Il résulte de ces dispositions que le moyen de levage et d'abaissement 17 de vitre comprend :
- au moins un support 171 assemblé au panneau de rigidification 12, coopérant avec la vitre 13 et déplaçable par rapport au panneau de rigidification 12 d'une manière faisant varier la vitre 13 entre les positions relevée et abaissée,
- au moins une butée (non représentée) assemblée au panneau de rigidification 12 et limitant la course du support 171,
- au moins un câble (non représenté) de mise en déplacement du support 171 et assemblé au panneau de rigidification 12,
- un moteur 172 assemblé au panneau de rigidification 12 et mettant en mouvement ledit au moins un câble,
- et éventuellement au moins une poulie de guidage (non représentée) dudit au moins un câble durant son mouvement et assemblée au panneau de rigidification 12.

Avantageusement, chaque support 171 est destiné à coulisser suivant une course donnée en étant guidé par le moyen de guidage 16. D'autre part, il est préférable d'aménager deux supports 171 distincts mais déplacés en synchronisme, en prévoyant un décalage latéral entre eux suivant la largeur de la vitre 13.

Dans un mode de réalisation, le panneau de rigidification 12 comprend des éléments de fixation, sur ledit panneau de rigidification 12, d'un module de commande d'ouverture extérieure (non représenté) de l'ouvrant 10 et/ou d'un support de verrou (non représenté) destiné à réaliser une fermeture de l'ouvrant 10 par rapport à la caisse de véhicule automobile équipée de l'ouvrant 10.

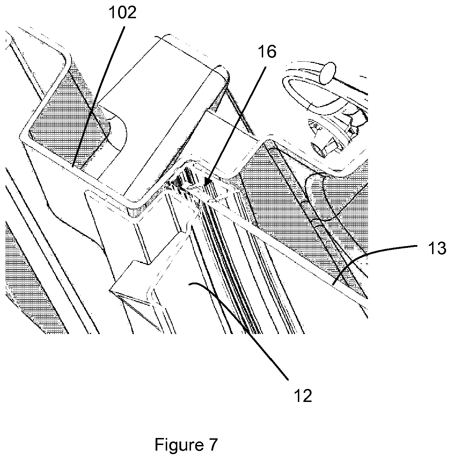

Il résulte de ce qui précède que l'ouvrant 10 comprend une vitre 13 guidée sur le panneau de rigidification 12 et un système de lève-vitre fixé au panneau de rigidification 12. La vitre 13 est avantageusement interposée entre la structure 100 (en étant donc située à l'extérieur de la structure 100) et le panneau de rigidification 12. Plus précisément, la vitre 13 est située entre le renfort structurel extérieur 102 de la structure 100 et le panneau de rigidification 12. Les figures 6 et 7 représentent ces dispositions, respectivement du côté du bord latéral arrière et du côté du bord latéral avant de la vitre 13.

Grâce à l'aménagement d'une telle structure 100, du panneau de rigidification 12 et du panneau extérieur de finition 11 dans une matière plastique, la structure 100 et/ou le panneau de rigidification 12 et/ou le panneau extérieur de finition 11 sont assemblés entre eux par soudage, notamment de type ultrason ou laser, et/ou par collage. Alternativement ou de manière combinée, la fixation peut toutefois se faire par vissage et/ou par encliquetage et/ou par rivetage et/ou par bouterollage.

Ce principe d'un panneau de rigidification 12 entièrement en plastique, notamment en matière thermoplastique, permet de respecter les principes de recyclage des pièces plastiques. Cette solution peut donc permettre de gagner du poids par rapport à une solution classique en tôle d'acier sans dégrader la prestation de recyclage.

L'assemblage d'un ouvrant 10 de véhicule automobile, notamment d'une porte latérale de véhicule automobile, se réalise de la manière suivante.

Dans un premier temps, il convient de fournir un tel panneau de rigidification 12 puis un système de lève-vitre est fixé sur le panneau de rigidification. Enfin, une vitre 13 est pré-montée sur un moyen de guidage 16 appartenant au système de lève-vitre préalablement fixé sur le panneau 12. Cela a pour effet de constituer un ensemble pré-monté constitué du panneau de rigidification 12, de la vitre 13 et du système de lève-vitre. Cet ensemble pré-monté est représenté sur les figures 2 et 3, respectivement depuis l'extérieur et depuis l'intérieur de cet ensemble.

Il est possible avec ce principe de créer un module constitué par l'ensemble formé par le panneau de rigidification 12, par le système de lève-vitre et par la vitre 13 assemblés entre eux, résultant de ladite étape de pré-montage. Ceci permet de réaliser un assemblage très aisé de l'ouvrant 10.

En effet, la suite de l'assemblage de l'ouvrant prévoit très simplement d'assembler l'ensemble constitué par la vitre 13 et le panneau de rigidification 12, issu du pré-montage décrit ci-dessus, avec la structure 100 et/ou avec au moins un panneau extérieur de finition 11.

Il devient également envisageable dans un principe de porte sans cadre, de réaliser un réglage de la vitre 13 et du système de lève vitre directement sur le panneau de rigidification 12, entre le pré-montage et l'assemblage final à la structure 100 et/ou au panneau extérieur de finition 11. Il en résulte une simplification du montage et du réglage de l'ouvrant 10 et du système de lève-vitre.

En outre, le panneau extérieur de finition 12 étant monté en dernier du côté de l'extérieur de l'ouvrant 10, la solution décrite dans ce document permet d'avoir un montage des pièces constitutives de l'ouvrant 10 par l'extérieur et donc d'avoir une doublure intérieure 101 qui assure une fonction partielle ou totale d'habillage intérieur tout en intégrant la piste d'étanchéité principale par rapport à la caisse.

## Revendications

1. Ouvrant (10) de véhicule automobile, notamment porte latérale de véhicule automobile, comprenant :
- une structure (100), notamment en matière plastique, disposée du côté d'un habitacle du véhicule fermé par l'ouvrant en position installée et configurée de sorte à encaisser la majorité des chocs extérieurs appliqués à l'ouvrant (10), notamment les chocs frontaux et latéraux appliqués à la porte latérale,
- au moins un panneau extérieur de finition (11), notamment en matière plastique, fixé sur ladite structure (100) du côté opposé à l'habitacle,
- un panneau de rigidification (12), disposé entre la structure (100) et ledit au moins un panneau extérieur de finition (11), formé dans une matière plastique, configuré de sorte à conférer une raideur audit panneau extérieur de finition (11) face aux chocs extérieurs appliqués à l'ouvrant (10) du côté opposé à l'habitacle, et comprenant des éléments de fixation, sur ledit panneau de rigidification (12), d'un système de lève-vitre,
- une vitre (13) portée par ledit système de lève-vitre fixé au panneau de rigidification (12) et guidée sur ledit panneau de rigidification (12), le panneau de rigidification (12) étant interposé entre le panneau extérieur de finition (11) et ladite vitre (13).

2. Ouvrant (10) selon la revendication 1, **caractérisé en ce que** le panneau de rigidification (12) est formé dans une matière thermoplastique.

3. Ouvrant (10) selon l'une des revendications 1 ou 2, **caractérisé en ce que** lesdits éléments de fixation comprennent :
- des éléments de montage, sur le panneau de rigidification (12), d'un moyen de guidage (16) appartenant audit système de lève-vitre et assurant un guidage d'une vitre (13) de l'ouvrant (10) entre une position abaissée et une position relevée,
- et/ou des éléments de montage, sur le panneau de rigidification (12), d'au moins un moyen de levage et d'abaissement (17) de vitre, appartenant audit système de lève-vitre et assurant un déplacement de la vitre (13) entre la position abaissée et la position relevée.

4. Ouvrant (10) selon la revendication 3, **caractérisé en ce que** les éléments de montage d'au moins un moyen de levage et d'abaissement (17) de vitre comprennent :
- des éléments d'assemblage, sur ledit panneau de rigidification (12), d'au moins un support (171) destiné à coopérer avec la vitre (13) et déplaçable par rapport audit panneau de rigidification (12) d'une manière faisant varier la vitre (13) entre les positions relevée et abaissée,
- des éléments d'assemblage, sur ledit panneau de rigidification (12), d'au moins une butée limitant la course dudit au moins un support (171),
- des éléments d'assemblage, sur ledit panneau de rigidification (12), d'au moins un câble de mise en déplacement du support (171),
- des éléments d'assemblage, sur ledit panneau de rigidification (12), d'un moteur (172) mettant en mouvement ledit au moins un câble,
- et éventuellement des éléments d'assemblage, sur ledit panneau de rigidification (12), d'au moins une poulie de guidage dudit au moins un câble durant son mouvement.

5. Ouvrant (10) selon l'une des revendications 1 à 4, **caractérisé en ce qu'**il comprend des éléments de fixation, sur ledit panneau de rigidification (12), d'un module de commande d'ouverture extérieure de l'ouvrant (10) et/ou d'un support de verrou destiné à réaliser une fermeture de l'ouvrant (10) par rapport à une caisse de véhicule automobile équipée dudit ouvrant (10).

6. Ouvrant (10) selon l'une des revendications 1 à 5, **caractérisé en ce que** l'ouvrant (10) comprend :
- un moyen de guidage (16) monté sur ledit panneau de rigidification (12), appartenant audit système de lève-vitre et assurant un guidage de la vitre (13) entre une position abaissée et une position relevée,
- et/ou au moins un moyen de levage et d'abaissement (17) de vitre monté sur le panneau de rigidification (12), appartenant audit système de lève-vitre et assurant un déplacement de la vitre (13) entre la position abaissée et la position relevée.

7. Ouvrant (10) selon la revendication 6, **caractérisé en ce que** ledit moyen de levage et d'abaissement (17) de vitre comprend :
- au moins un support (171) assemblé au panneau de rigidification (12), coopérant avec la vitre (13) et déplaçable par rapport audit panneau de rigidification (12) d'une manière faisant varier la vitre (13) entre les positions relevée et abaissée,
- au moins une butée assemblée au panneau de rigidification (12) et limitant la course dudit au moins un support (171),
- au moins un câble de mise en déplacement du support et assemblé au panneau de rigidification (12),
- un moteur (172) assemblé au panneau de rigidification (12) et mettant en mouvement ledit au moins un câble,
- et éventuellement au moins une poulie de guidage dudit au moins un câble durant son mouvement et assemblée au panneau de rigidification (12).

8. Ouvrant (10) selon l'une des revendications 1 à 7, **caractérisé en ce que** la structure (100) et/ou le panneau de rigidification (12) et/ou le panneau extérieur de finition (11) sont assemblés entre eux par soudage, notamment de type ultrason ou laser, et/ou par collage et/ou par vissage et/ou par encliquetage et/ou par rivetage et/ou par bouterollage.

9. Ouvrant (10) selon l'une des revendications 1 à 8, **caractérisé en ce que** la structure (100) comprend d'une part une doublure intérieure (101) en matière plastique disposée, suivant l'épaisseur de l'ouvrant (10), d'un côté de la structure (100) destiné à être orienté vers l'habitacle du véhicule, d'autre part un renfort structurel extérieur (102) en matière plastique disposé, suivant l'épaisseur de l'ouvrant (10), d'un côté de la structure (100) opposé à l'habitacle par rapport à la doublure intérieure (101), la doublure intérieure (101) et le renfort structurel extérieur (102) étant configurés et assemblés l'un à l'autre de sorte à délimiter entre eux un corps creux conférant la résistance de la structure face aux chocs extérieurs.

10. Procédé d'assemblage d'un ouvrant (10) de véhicule automobile, selon l'une quelconque des revendications 1 à 9, comprenant les étapes successives suivantes :
- une étape de fourniture du panneau de rigidification (12),
- une étape de fixation, sur ledit panneau de rigidification (12), du système de lève-vitre,
- une étape de pré-montage du vitre (13) sur un moyen de guidage (16) appartenant audit système de lève-vitre,
- une étape d'assemblage de l'ensemble constitué par ladite vitre (13) et ledit panneau de rigidification (12), issu de l'étape de pré-montage, avec la structure (100) et/ou avec ledit au moins un panneau extérieur de finition (11).

## Patentansprüche

1. Türflügel (10) eines Kraftfahrzeugs, insbesondere einer Kraftfahrzeugseitentür, der Folgendes aufweist:
- eine Struktur (100), insbesondere aus Kunststoff, die an der Seite eines Fahrgastraums des durch den Türflügel in installierter Position geschlossenen Fahrzeugs angeordnet ist und zum Absorbieren des Großteils der auf den Türflügel (10) einwirkenden äußeren Stöße, insbesondere der auf die Seitentür einwirkenden Frontal- und Seitenstöße, ausgebildet ist,
- mindestens eine äußere Abschlussplatte (11), insbesondere aus Kunststoff, die an der Struktur (100) der dem Fahrgastraum gegenüberliegenden Seite befestigt ist,
- eine Versteifungsplatte (12), die zwischen der Struktur (100) und der mindestens einen äußeren Abschlussplatte (11) angeordnet ist und aus einem Kunststoffmaterial gebildet wird und so ausgebildet ist, dass sie der äußeren Abschlussplatte (11) eine Steifheit gegenüber auf den Türflügel (10) der dem Fahrgastraum gegenüberliegenden Seite einwirkende äußere Stöße verleiht und Befestigungselemente eines Fensterhebersystems auf der Versteifungsplatte (12) aufweist,
- ein Fenster (13), das von dem an der Versteifungsplatte (12) angebrachten Fensterhebersystem getragen und auf der Versteifungsplatte (12) geführt wird, wobei sich die Versteifungsplatte (12) zwischen der äußeren Abschlussplatte (11) und dem Fenster (13) befindet.

2. Türflügel (10) nach Anspruch 1, **dadurch gekennzeichnet, dass** die Versteifungsplatte (12) aus einem thermoplastischen Kunststoffmaterial gebildet wird.

3. Türflügel (10) nach einem der Ansprüche 1 oder 2, **dadurch gekennzeichnet, dass** die Befestigungselemente Folgendes aufweisen:
- Elemente zur Montage eines Führungsmittels (16) auf der Versteifungsplatte (12), das zu dem Fensterhebersystem gehört und eine Führung eines Fensters (13) des Türflügels (10) zwischen einer abgesenkten Position und einer angehobenen Position sicherstellt,
- und/oder Elemente zur Montage mindestens eines Mittels zum Anheben und Absenken (17) des Fensters auf der Versteifungsplatte (12), das zu dem Fensterhebersystem gehört und ein Bewegen des Fensters (13) zwischen der abgesenkten Position und der angehobenen Position sicherstellt.

4. Türflügel (10) nach Anspruch 3, **dadurch gekennzeichnet, dass** die Elemente zur Montage mindestens eines Mittels zum Anheben und Absenken (17) des Fensters Folgendes aufweisen:
- Elemente zum Anbringen auf der Versteifungsplatte (12) von mindestens einer Stütze (171), die mit dem Fenster (13) zusammenwirken soll und in Bezug auf die Versteifungsplatte (12) in einer Weise bewegbar ist, dass das Fenster (13) zwischen der angehobenen und der abgesenkten Position verschoben wird,
- Elemente zum Anbringen auf der Versteifungsplatte (12) von mindestens einem Anschlag, der den Weg der mindestens einen Stütze (171) begrenzt,
- Elemente zum Anbringen auf der Versteifungsplatte (12) von mindestens einem Kabel zum Bewegen der Stütze (171),
- Elemente zum Anbringen auf der Versteifungsplatte (12) von mindestens einem Motor (172), der das mindestens eine Kabel in Bewegung versetzt,
- und eventuell Elemente zum Anbringen auf der Versteifungsplatte (12) von mindestens einer Umlenkrolle zum Führen des mindestens einen Kabels während seiner Bewegung.

5. Türflügel (10) nach einem der Ansprüche 1 bis 4, **dadurch gekennzeichnet, dass** er auf der Versteifungsplatte (12) Befestigungselemente eines Steuermoduls zum Öffnen des Türflügels (10) von außen und/oder eine Stütze für ein Schloss zum Verschließen des Türflügels (10) in Bezug auf eine Karosserie des mit diesem Türflügel (10) ausgestatteten Kraftfahrzeugs aufweist.

6. Türflügel (10) nach einem der Ansprüche 1 bis 5, **dadurch gekennzeichnet, dass** der Türflügel (10) Folgendes aufweist:
- ein auf der Versteifungsplatte (12) angebrachtes Führungsmittel (16), das zu dem Fensterhebersystem gehört und eine Führung des Fensters (13) zwischen einer abgesenkten Position und einer angehobenen Position sicherstellt,
- und/oder mindesten ein auf der Versteifungsplatte (12) angebrachtes Mittel zum Anheben und Absenken (17) des Fensters, das zu dem Fensterhebersystem gehört und ein Bewegen des Fensters (13) zwischen der abgesenkten Position und der angehobenen Position sicherstellt.

7. Türflügel (10) nach Anspruch 6, **dadurch gekennzeichnet, dass** das Mittel zum Anheben und Absenken (17) des Fensters Folgendes aufweist:
- mindestens eine auf der Versteifungsplatte (12) angebrachte Stütze (171), die mit dem Fenster (13) zusammenwirkt und in Bezug auf die Versteifungsplatte (12) in einer Weise bewegbar ist, dass das Fenster (13) zwischen der angehobenen und der abgesenkten Position verschoben wird,
- mindestens einen auf der Versteifungsplatte (12) angebrachten Anschlag, der den Weg der mindestens einen Stütze (171) begrenzt,
- mindestens ein auf der Versteifungsplatte (12) angebrachtes Kabel zum Bewegen der Stütze,
- einen auf der Versteifungsplatte (12) angebrachten Motor (172), der das mindestens eine Kabel in Bewegung versetzt,
- und eventuell mindestens eine auf der Versteifungsplatte (12) angebrachte Umlenkrolle zum Führen des mindestens einen Kabels während seiner Bewegung.

8. Türflügel (10) nach einem der Ansprüche 1 bis 7, **dadurch gekennzeichnet, dass** die Struktur (100) und/oder die Versteifungsplatte (12) und/oder die äußere Abschlussplatte (11) durch Schweißung, insbesondere vom Typ Ultraschallschweißung oder Laserschweißung, und/oder durch Verklebung und/oder durch Verschraubung und/oder durch Rastung und/oder durch Nietung und/oder durch Abkantung zusammengefügt sind.

9. Türflügel (10) nach einem der Ansprüche 1 bis 8, **dadurch gekennzeichnet, dass** die Struktur (100) zum einen eine Innenauskleidung (101) aus Kunststoff aufweist, die entsprechend der Dicke des Türflügels (10) auf einer Seite der Struktur (100) angeordnet ist, die zum Fahrgastraum des Fahrzeugs hin ausgerichtet sein soll, und zum anderen eine äußere strukturelle Verstärkung (102) aus Kunststoff, die entsprechend der Dicke des Türflügels (10) auf einer Seite der Struktur (100) angeordnet ist, die in Bezug zur Innenauskleidung (101) dem Fahrgastraum gegenüberliegt, wobei die Innenauskleidung (101) und die äußere strukturelle Verstärkung (102) so ausgebildet und zusammengefügt sind, dass zwischen ihnen ein Hohlkörper abgegrenzt wird, der der Struktur Festigkeit gegenüber einwirkende äußere Stöße verleiht.

10. Verfahren zum Zusammenfügen eines Türflügels (10) eines Kraftfahrzeugs nach einem der Ansprüche 1 bis 9, das die folgenden aufeinanderfolgenden Schritte aufweist:
- einen Schritt des Zuführens der Versteifungsplatte (12),
- einen Schritt des Befestigens des Fensterhebersystems an der Versteifungsplatte (12),
- einen Schritt der Vormontage des Fensters (13) auf einem Führungsmittel (16), das zu dem Fensterhebersystem gehört,
- einen Schritt des Zusammenfügens der Baugruppe bestehend aus dem Fenster (13) und der Versteifungsplatte (12) aus dem Schritt der Vormontage mit der Struktur (100) und/oder der mindestens einen äußeren Abschlussplatte (11).

## Claims

1. Motor vehicle door (10), notably a motor vehicle side door, comprising:
- a structure (100), notably of plastic material, disposed on the side of an interior of the vehicle closed by the door in the installed position and configured so as to absorb most of the external impacts applied to the door (10), notably the front-end and side impacts applied to the side door,
- at least one outer finishing panel (11), notably of plastic material, fixed onto said structure (100) on the side opposite the interior,
- a stiffening panel (12), disposed between the structure (100) and said at least one outer finishing panel (11), formed in a plastic material, configured so as to confer a stiffness on said outer finishing panel (11) with respect to the external impacts applied to the door (10) on the side opposite the interior, and comprising elements for fixing, on said stiffening panel (12), a window lift system,
- a window (13) borne by said window lift system fixed to the stiffening panel (12) and guided on said stiffening panel (12), the stiffening panel (12) being interposed between the outer finishing panel (11) and said window (13).

2. Door (10) according to Claim 1, **characterized in that** the stiffening panel (12) is formed in a thermoplastic material.

3. Door (10) according to one of Claims 1 and 2, **characterized in that** said fixing elements comprise:
- elements for mounting, on the stiffening panel (12), a guiding means (16) belonging to said window lift system and ensuring a guiding of a window (13) of the door (10) between a lowered position and a raised position,
- and/or elements for mounting, on the stiffening panel (12), at least one window lifting and lowering means (17), belonging to said window lift system and ensuring a displacement of the window (13) between the lowered position and the raised position.

4. Door (10) according to Claim 3, **characterized in that** the elements for mounting at least one window lifting and lowering means (17) comprise:
- elements for assembling, on said stiffening panel (12), at least one support (171) intended to cooperate with the window (13) and that can be displaced relative to said stiffening panel (12) in a manner that varies the window (13) between the raised and lowered positions,
- elements for assembling, on said stiffening panel (12), at least one abutment limiting the travel of said at least one support (171),
- elements for assembling, on said stiffening panel (12), at least one support (171) displacing cable,
- elements for assembling, on said stiffening panel (12), a motor (172) setting said at least one cable in motion,
- and possibly elements for assembling, on said stiffening panel (12), at least one guiding pulley for said at least one cable during its movement.

5. Door (10) according to one of Claims 1 to 4, **characterized in that** it comprises elements for fixing, on said stiffening panel (12), a door outer opening control module (10) and/or a lock support intended to produce a closing of the door (10) relative to a motor vehicle body equipped with said door (10).

6. Door (10) according to one of Claims 1 to 5, **characterized in that** the door (10) comprises:
- a guiding means (16) mounted on said stiffening panel (12), belonging to said window lift system and ensuring a guiding of the window (13) between a lowered position and a raised position,
- and/or at least one window lifting and lowering means (17) mounted on the stiffening panel (12), belonging to said window lift system and ensuring a displacement of the window (13) between the lowered position and the raised position.

7. Door (10) according to Claim 6, **characterized in that** said window lifting and lowering means (17) comprises:
- at least one support (171) assembled with the stiffening panel (12), cooperating with the window (13) and that can be displaced relative to said stiffening panel (12) in a manner that varies the window (13) between the raised and lowered positions,
- at least one abutment assembled with the stiffening panel (12) and limiting the travel of said at least one support (171),
- at least one cable for displacing the support and assembled with the stiffening panel (12),
- a motor (172) assembled with the stiffening panel (12) and setting said at least one cable in motion,
- and possibly at least one guiding pulley for said at least one cable during its movement and assembled with the stiffening panel (12).

8. Door (10) according to one of Claims 1 to 7, **characterized in that** the structure (100) and/or the stiffening panel (12) and/or the outer finishing panel (11) are assembled with one another by welding, notably of ultrasound or laser type, and/or by bonding and/or by screwing and/or by snap-fitting and/or by riveting and/or by snap-riveting.

9. Door (10) according to one of Claims 1 to 8, **characterized in that** the structure (100) comprises, on the one hand, an inner lining (101) of plastic material disposed, according to the thickness of the door (10), on a side of the structure (100) intended to be oriented towards the interior of the vehicle, on the other hand, an outer structural reinforcement (102) of plastic material disposed, according to the thickness of the door (10), on a side of the structure (100) opposite the interior relative to the inner lining (101), the inner lining (101) and the outer structural reinforcement (102) being configured and assembled with one another so as to delimit between them a hollow body conferring the resistance of the structure with respect to the external impacts.

10. Method for assembling a motor vehicle door (10), according to any one of Claims 1 to 9, comprising the following successive steps:
- a step of supplying the stiffening panel (12),
- a step of fixing, on said stiffening panel (12), the window lift system,
- a step of pre-mounting the window (13) on a guiding means (16) belonging to said window lift system,
- a step of assembling the assembly composed of said window (13) and said stiffening panel (12), obtained from the pre-mounting step, with the structure (100) and/or with said at least one outer finishing panel (11).
